# EUROPÄISCHE PATENTSCHRIFT

(11) **EP 2 404 785 B1**
(45) Veröffentlichungstag und Bekanntmachung des Hinweises auf die Patenterteilung: **01.01.2014**
(21) Anmeldenummer: 10168254.0
(22) Anmeldetag: 02.07.2010
(51) Int. Cl.: B60R 16/02, F16B 7/04, F16L 3/23

(54) **Befestigungselement für langgestrecktes Gut**
Fixing element for stretched goods
Elément de fixation pour produits longitudinaux

(43) Veröffentlichungstag der Anmeldung: 11.01.2012
(73) Patentinhaber: SMR Patents S.à.r.l., 1653 Luxembourg (LU)
(72) Erfinder: Herrmann, Andreas, 71364, Winnenden-Baach (DE); Negel, Raimund, 72669, Unterensingen (DE); Schmierer, Arne, 73230, Kirchheim (DE)
(74) Vertreter: Weber-Bruls, Dorothée

(56) Entgegenhaltungen:
- EP-A1- 1 286 094
- EP-A2- 2 106 006
- DE-U1- 9 405 363
- DE-U1-202006 010 110

## Beschreibung

Die vorliegende Erfindung befasst sich mit einem für langgestreckte Güter wie Kabel und/oder Versorgungsleitungen.

In der Automobilindustrie werden Kabelbäume und Kabelverbindungen in großen Mengen verlegt. Zur Verlegung dieser Kabel, Leitungen und Seilzügen und zur Fixierung dienen Clipse, die oft Kabelbinder aufweisen, die nach einmaligem Gebrauch nicht wieder verwendet werden können.

### Stand der Technik

Es ist aus der DE 93 17 983 U ein Befestigungselement bekannt, das mit einer Befestigungsschelle aus Kunststoff, die zum Halten beispielsweise von Kabelbäumen dient, einstückig mit einem Verankerungsteil verbinden ist, der zum Anbringen der Befestigungsschelle und damit des Kabelbaums an einem Bauteil dient. Der Verankerungsteil ist beispielsweise mit Spreizgliedern ausgerüstet, mit denen er sich in oder hinter einer Öffnung verankert. Aus der Verankerungsstellung kann er zerstörungsfrei nur dadurch gelöst werden, dass die die Verankerung bewirkenden Teile von der Rückseite des Bauteils her gelöst werden. Häufig ist aber der Raum hinter der Befestigungsstelle nicht zugänglich. Muss das Befestigungselement entfernt werden, um beispielsweise nach Beschädigung einem neuen Befestigungselement Platz zu machen, muss es zerstört werden.

Ein beispielhaftes Befestigungselement mit Schellenband ist aus der EP 0 571 327 B1 bekannt. Das Befestigungselement weist ein Schellenband auf, das über eine Öse mit einem Körper verbunden ist. Ein solches Befestigungselement mit Schellenband hat bei der Verwendung in einem Fahrzeug den Nachteil, dass an der Stelle an der das Verankerungsteil in die Wand eingepresst wird keine Dichtfunktion vorhanden ist. Gerade für Fahrzeuge ist es aber wichtig, dass Öffnungen, die nach außen gehen, abgedichtet werden.

Es ist daher eine Aufgabe der Erfindung ein Befestigungselement bereitzustellen, der sowohl variable Befestigungsmöglichkeiten für langgestreckte Güter, wie Kabel, Seilzüge oder Leitungen aufweist und eine Dichtfunktion ausführt.

Die EP 1 286 094 A1 betrifft ein Trageteil, das speziell für die Sicherung von Kabelbündeln an der Karosserie eines Fahrzeuges mit einer Klemme ausgeformt ist, die im Presssitz, durch elastische Verformung in ein Loch in einem Blechteil einführbar ist bis zu einer begrenzenden Position, die durch das Blechteil festgelegt ist. Das Trageteil enthält als axiale Verlängerung der Klemme eine Säule, die in Längsrichtung verschiebbar in einer Halterung sitzt, die in Arme zum Halten eines Kabelbündels übergeht.

Aus der DE 20 2006 010 110 U1 ist eine Befestigungsvorrichtung für eine Leitung bekannt, mit einer länglichen Schiene und einem Befestigungsabschnitt, der eine Axialrichtung definiert, wobei die Schiene auf einer Oberseite eine Auflagefläche für die Leitung aufweist und der Befestigungsabschnitt auf der der Oberseite entgegengesetzten Unterseite angeordnet und in einem Rahmen verschiebbar gehalten ist.

Die EP 2 106 006 A2 offenbart eine Kabeldurchführung für eine Gehäusewandung, welche in Form einer ebenen Tragplatte aus einem Isoliermaterial, vorzugsweise Kunststoff, mit wenigstens einem als Sollbruchstelle vorgesehenen markierten Bereich gefertigt ist, der bedarfsweise als Kabeldurchgang dient, und an ihrem äußeren Rand mit einem umlaufenden Dichtflansch versehen ist, die an eine hierfür in einer Wand oder Zwischenwand, Decke oder einem Boden eines Verteilerschrankes, eines Verteilerkastens oder eines Zählerplatzes oder dergleichen vorgesehene Ausnehmung ansetzbar und fixierbar ist, wobei jedem markierten Bereich eine Vorrichtung zur Zugentlastung zugeordnet ist.

Das erfindungsgemäße Befestigungselement hat die Aufgabe, Kabel und/oder Leitungen sicher zu halten, dabei aber einfach zu montieren und einfach mit dem Kabel verbindbar zu sein.

Diese Aufgabe wird durch ein Befestigungselement nach Anspruch 1 gelöst. Eine bevorzugte Ausführungsform der Erfindung ist in Anspruch 2 beschrieben.

### Kurze Beschreibung der Erfindung

Die Erfindung wird im Folgenden näher unter Bezugnahme auf die Zeichnung erläutert, die ein bevorzugtes Ausführungsbeispiel veranschaulicht. Darin zeigen:
Fig. 1 einen erfindungsgemäßen Befestigungselement
Fig. 2 eine Draufsicht des erfindungsgemäßen Befestigungselement
Fig. 3 ein Schnittbild durch die Schnittlinie A-A von Fig. 2; und
Fig. 4 iein Schnittbild durch die Schnittlinie B-B von Fig. 2.

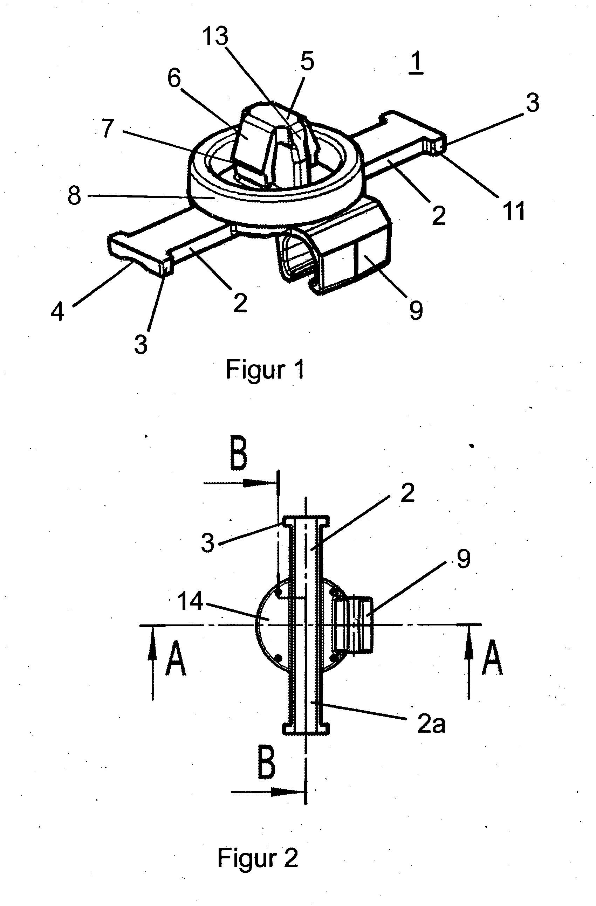

Das erfindungsgemäße Befestigungselement 1 weist mindestens einen Steg 2 auf. Die Stege 2, wie sie in Fig. 1 dargestellt sind, erstrecken sich in gerader Linie von einem Verankerungsteil 5 weg, das mit einer Grundplatte 14 verbunden ist. Die Stege sind in einem Stück ausgebildet. Die Stege dienen zur Befestigung von langestreckten Gütern, wie Kabeln oder Leitungen, die entlang der Längsachsen der Stege geführt werden. Die Stege weisen jeweils an ihrem Ende Nasen 3 auf, die den Steg am Ende verbreitern. Die Nasen weisen an der Innenseite eine Rippenstruktur 11 auf. Das Verankerungsteil 5 besitzt zwei Spreizarme 6, die in Verankerungselementen 7 auslaufen. Das Verankerungsteil 5 hat in der Ausführungsform der Fig. 1 eine plane Stirnfläche und angeschrägte Seitenflächen 13. Der Körper des Verankerungsteils 5 ist von einem kreisförmigen Dichtungsring 8 umgeben. Der Dichtungsring 8 ist ein integraler Bestandteil des Befestigungselements und wird in 2-K Spritztechnik direkt mit dem Befestigungselement geformt.

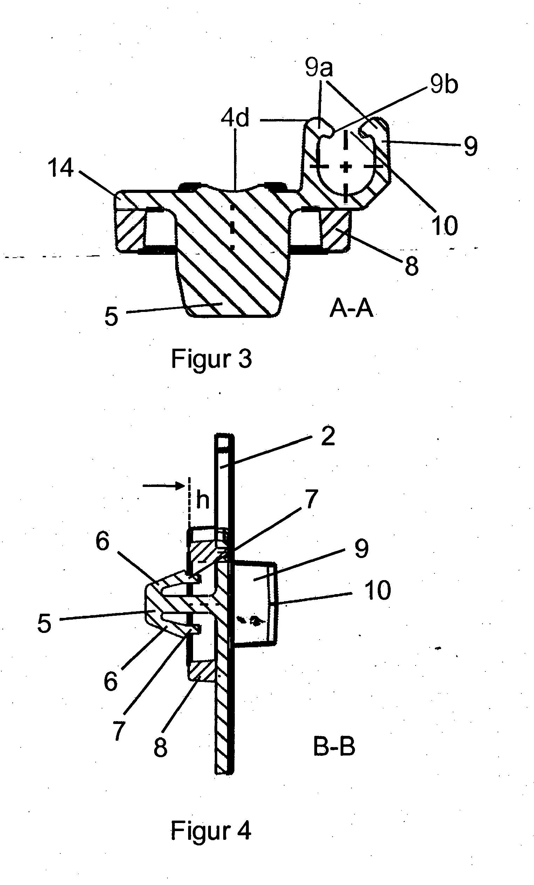

Das Befestigungselement 1 weist weiterhin einen Träger 9 auf. Der Träger 9 ist als Hohlzylinder mit einer Öffnung entlang der langen Zylinderachse ausgebildet. Der Träger 9 ist parallel zu den Stegen 2 an der Grundplatte des Befestigungselement angebracht. Der Träger 9 weist eine zylinderförmige, langstreckte Struktur auf, die eine Öffnung zum Einbringen eines Kabels aufweist. Die Öffnung muss sich dabei nicht zwingend in der der In Fig. 3 oben liegenden Position befinden. Die Öffnung kann in einer anderen Ausführungsform auch auf der Seite oder fast auf der gegenüberliegenden Seite des Hohlzylinders angeordnet sein. Die durch die Öffnung entstehenden Arme 9a weisen Nasen 9b auf, die nach innen gewölbt sind. Dadurch wird das zu montierende langgestreckte Gut besser fixiert.

Fig. 2 zeigt eine Aufsicht von unten auf das Befestigungselement. Man erkennt die Stege 2, die sich von einer Grundplatte 14 wegerstrecken. In dieser Ausführungsform sind die Stege zu einem Bauteil vereint. Die Stege laufen in Nasen 3 aus. Man erkennt den Träger 9, der sich auf der rechten Seite der Grundplatte befindet.

In einer anderen Ausführungsform ist auch ein zweiter Träger 9 auf der anderen Seite der Grundplatte angeordnet.

Fig. 3 zeigt im Schnitt A-A die Möglichkeiten der Befestigung für langestreckte Güter in einer Ausführungsform, die nur einen Träger 9 aufweist. Die Hauptbefestigung erfolgt für Kabel oder Leitungen entlang der Stege 2. Dadurch wird das zu befestigende Gut entlang der Stege geführt und liegt auf dem leichten Radius 4 der Grundplatte 14 und der Stege 2 des Befestigungselement auf. Der Radius 4 ist dabei an den Sollradius des zu verlegenden Gutes angepasst. Das langstreckte Gut bekommt durch die Führung entlang der Stege eine Sollrichtung und kann entlang der Führung auch nicht abknicken. Gerade bei hohlen Leitungen ist das wichtig. Begrenzt wird der Durchmesser des zu verlegenden Gutes durch den Abstand D des Mittelpunktes des Querschnitts des zu verlegenden Gutes von der Außenwand des Trägers 9.

Fig. 4 stellt einen Längsschnitt durch die Achse B-B dar. In diesem Schnitt ist die Struktur des Verankerungsteils 5 zu erkennen. Das Verankerungsteil weist zwei Spreizarme 6 auf, die in Verankerungselementen 7 münden. Im Schnitt ist der Dichtring 8 zu erkennen, dessen Höhe h so gewählt ist, dass die Verrastungselemente 7 innerhalb des vom Rings mit der Höhe h gebildeten Volumens liegen. Die Höhe des Dichtrings wird so gewählt, dass der gewünschte Dichteffekt nach Montage und Verrastung des Befestigungselement gewährleistet ist. Die Ausbildung der Spreizarme ist dabei nur beispielhaft zu sehen, so sind mehrere Spreizarme oder einen Pilzkopfförmige Struktur ebenfalls einsetzbar.

Es ist dabei aber wichtig, dass die Verrastungselemente innerhalb des Volumens des Dichtrings 8 liegen, um die Dichtfunktion zu gewährleisten. Diese Volumen wird von der kreisförmigen Grundflache und der Höhe der Dichtung h begrenzt.

Das Befestigungselement wird in einem Zweikomponenten-Spritzguss hergestellt. Die Ausbildungen sind nur durch die Ausformbarkeit aus einem Spritzgusswerkzeug begrenzt. Als Material wird für den Clips dient ASA oder ABS oder PMMA, für den Dichtring wird ein Thermoplastisches Elastomer eingesetzt.

Für das Verlegen der langgestreckten Güter wird das erfindungsgemäße Befestigungselement in eine Öffnung im Fahrzeug eingedrückt. Dabei kann es sich um jedes Bauteil im Fahrzeug handeln, das einen Grenze zwischen nassen Außenbereich und trockenen Innenbereich darstellt.

Als Bespiel wird ein Autotürblech gewählt.

In einem ersten Schritt wird das langgestreckte Gut entlang der Stege 2 geführt. Über einen Kabelbinder oder eine Schelle wird das langgestreckte Gut am Steg befestigt mindestens an einer Position fixiert. Dabei dienen die Nasen 3 sowie die Rippen 11 als Führung und Verrutschschutz für den einzusetzenden Kabelbinder. Nach der Montage des ersten langgestreckten Gutes können alternativ weitere Kabel in die dafür vorgesehenen Träger verlegt werden oder das Befestigungselement wird gleich an der dafür vorgesehen Wandung befestigt.

Das Verankerungsteil wird dabei durch seine konisch zulaufende Form, die von den zwei Spreizarmen gebildet wird, geführt und rastet mit den Verrastungselementen 7 in der Öffnung des Fahrzeuges ein. Da sich die Verrastungselemente 7 innerhalb des Volumens des Dichtringes 8 befinden, wird dabei der Dichtring 8 an die Wand des Fahrzeuges gepresst und verschließt die Öffnung, in die das Verankerungsteil eingeführt wurde, wasserdicht. Nachdem das Befestigungselement mit der Wand des Fahrzeuges verbunden ist und bereits für ein Kabel oder eine Leitung als Befestigung und Führung dient, werden in den Träger 9 weitere Kabel oder Leitungen verlegt.

In einer weiteren Ausbaustufe ist ein Befestigungselement mit weiteren Trägerstrukturen denkbar, in die weitere langgestreckte Güter wie Kabel und Leitungen verlegt werden können. Von Vorteil ist dabei, dass nach der Montage des Befestigungselement in einer Fahrzeugwand die öffnung auf der für weitere Montagen zugänglichen Seite befindet.

Alternativ kann das Befestigungselement auch schon mit allen langestreckten Gütern vormontiert in die Fahrzeugwand eingesteckt werden.

### Legende:

1 Befestigungselement
2 Steg
3 Nase
4 Radius
5 Verankerungsteil
6 Spreizarm
7 Verrastungselement
8 Dichtungsring
9 Träger
9a Nase am Träger
10 Öffnung
11 Rippen
14 Grundplatte
h Höhe der Dichtung

## Patentansprüche

1. Befestigungselement (1) zur Befestigung von langgestreckten Gütern in einem Kraftfahrzeug mit
• einem Verankerungsteil (5), das in eine Wand eingreift, an der ein Befestigungsteil (2,9,14) angebracht ist, wobei das Verankerungsteil (5) Verrastungselemente (7) aufweist, und
• einer Dichtung (8), die das Verankerungsteil (5) kreisförmig umgibt, und
• mindestens einem Träger (9) für ein weiteres langgestrecktes Gut, und
• mindestens einem Steg (2), der sich entlang des langgestreckten Gutes erstreckt und eine Anlagefläche (11) für einen Kabelbinder aufweist, und/oder Stege (2), die auf ihrer Stirnfläche (2a) eine Radius aufweisen, der dem Radius des zu verlegenden langgestreckten Gutes entspricht,
wobei
die Dichtung (8) am Befestigungsteil (2,9,14) als 2-K-Bauteil angespritzt ist und eine Höhe (h) hat, die mit der eingeschlossenen Grundfläche des Ringes ein Volumen umfasst, in das die Verrastungselemente (7) ragen.

2. Befestigungselement nach Anspruch 1, **dadurch gekennzeichnet, dass**
der Träger (9) als Zylinder mit einer Öffnung entlang der Zylinderlängsachse ausgebildet ist,
wobei Nasen (9a) zur Fixierung des langgestreckten Gutes angebracht sind.

## Claims

1. Fastening element (1) for fastening elongated materials in a motor vehicle, comprising:
• an anchoring part (5), which engages in a wall, to which the fastening element (1) is attached, with the anchoring part (5) having locking elements (7),
• a seal (8), which circularly surrounds the anchoring part (5),
• a support (9) for a further elongated material, and
• at least one bar (2), which extends along the elongated material and having a contact surface (11) for a cable tie, and/or bars (2), which have a radius at their front faces (2a), which radius corresponds to the radius of the elongated material to be installed, wherein
the seal (8) is injected on the fastening element (1) as a 2-K component and has a height (h), which comprises a volume together with the surrounded base area of the ring, into which the locking elements (7) extend.

2. Fastening element (1) according to claim 1, wherein
the support (9) is formed as a cylinder with an opening along the cylinder longitudinal axis, with noses (9a) being attached for fixing the elongated material.

## Revendications

1. Élément de fixation (1) pour la fixation de marchandises de forme allongée dans un véhicule automobile, ayant
- une partie d'ancrage (5), qui vient en prise dans une paroi, et à laquelle est attachée une partie de fixation (2, 9, 14), dans lequel la partie d'ancrage (5) comporte des éléments d'accrochage (7), et
- un joint d'étanchéité (8) entourant la partie d'ancrage (5) de manière circulaire, et
- au moins un support (9) pour une antre marchandise de forme allongée, et
- au moins une traverse (2), qui s'étend le long de la marchandise allongée, et qui présente une surface de contact (11) pour un attache de câble, et/ou des traverses (2) présentant un rayon sur leur surface d'extrémité (2a), qui correspond au rayon de la marchandise de forme allongée devant y être posée,
**caractérisé en ce que**
le joint d'étanchéité (8) sur la partie de fixation (2, 9, 14) est moulé sous la forme d'un élément préfabriqué à deux composants, et a une hauteur (h) qui délimite un volume avec la surface de base enclavée de l'anneau, dans lequel font saillie les éléments d'accrochage (7).

2. Élément de fixation selon la revendication 1, **caractérisé en ce que** le support (9) est réalisé sous la forme d'un cylindre muni d'une ouverture le long de son axe longitudinale, dans laquelle des saillies (9a) sont mises en prise pour fixer la marchandise de forme allongée.
